# EUROPEAN PATENT APPLICATION

(11) **EP 4 075 543 A2**
(43) Date of publication of application: **19.10.2022**
(21) Application number: 22165713.3
(22) Date of filing: 30.03.2022
(51) Int. Cl.: H01M 4/133, H01M 4/587, H01M 50/417, H01M 50/434, H01M 50/443, H01M 50/46, H01M 50/451, H01M 50/457

(54) **ELECTROCHEMICAL DEVICE AND ELECTRONIC DEVICE**

(30) Priority: 31.03.2021 CN 202110347445
(71) Applicant: Ningde Amperex Technology Ltd., Ningde City, Fujian 352100 (CN)
(72) Inventor: ZHANG, Hanxiang, Ningde City, Fujian Province, 352100 (CN)
(74) Representative: Icosa

(57) **Abstract**

An electrochemical device includes a negative electrode active material layer and a separator. The separator includes a substrate and an adhesive layer. The negative electrode active material layer includes a hard carbon. The negative electrode active material layer has a porosity of 20% to 60%. The adhesive layer has an adhesive force of 5 N to 20 N.

## Description

### BACKGROUND

### 1. Technical field

The application relates to the field of electrochemistry, and in particular to an electrochemical device and electronic device.

### 2. Description of the related art

At present, 5G mobile phones have been widely promoted on the market, and faster communication phones will gradually land later, which brings about issues of battery energy consumption. Data show that the energy consumption of 5G is about 30% to 50% higher than that of 4G to greatly reduce the battery life, which also puts forward higher requirements for the energy density of battery. Most of the negative electrode materials in batteries use graphite. However, the capacity per gram of graphite (374mAh/g) is relatively low, and the development of graphite materials for commercial applications is close to the theoretical capacity per gram. If it continues to improve, the income is small. Therefore, there is an urgent need to develop novel negative electrode materials so as to increase the energy density of the battery. There are many kinds of negative electrode materials with a high capacity per gram, such as hard carbon, silicon, metal oxides and the like. For hard carbon materials, we can achieve its capacity per gram > 1000 mAh/g, which can greatly increase the energy density of the battery. However, there are currently many of problems in the development of hard carbon in mobile phones. Among them, the key bottleneck is abnormal deformation caused by corner stripping due to the hard carbon being hard and brittle during the battery cell cycle, which limits the application of hard carbon in the market.

### SUMMARY

In view of the problems existing in the background art, the purpose of the present application is to provide an electrochemical device and electronic device, the electrochemical device has the characteristics of improved fast charge cycle performance and low hard carbon deformation rate.

In some embodiments, the electrochemical device comprises a negative electrode active material layer and a separator; and the separator comprises a substrate and an adhesive layer; the negative electrode active material layer comprises hard carbon, and the negative electrode active material layer has a porosity of 20% to 60%; and the adhesive layer has an adhesive force of 5 N to 20 N.

In some embodiments, the adhesive layer is provided on the surface of the substrate close to the negative electrode active material layer, and the adhesive force of the adhesive layer is an adhesive force between the adhesive layer and the negative electrode active material layer.

In some embodiments, the hard carbon has a volume-based cumulative particle diameter Dᵥ99 of 12 µm to 30 µm.

In some embodiments, the hard carbon has a specific surface area of 2 m²/g to 8 m²/g.

In some embodiments, the negative electrode active material layer has a compacted density of 0.8 g/cm³ to 1.5 g/cm³.

In some embodiments, the substrate comprises a single layer or multi-layer formed by at least one of polyethylene, polypropylene, polyvinylidene fluoride, ethylene-propylene copolymer, ethylene-butene copolymer, ethylene-hexene copolymer, ethylene-methyl methacrylate copolymer, polyethylene terephthalate, polyimide, or aramid.

In some embodiments, the adhesive layer comprises a single layer or multi-layer formed by at least one of polyvinylidene fluoride or vinyl-polysilsesquioxane.

In some embodiments, the separator further comprises a ceramic layer.

In some embodiments, the negative electrode active material layer has a porosity of 40% to 60%.

In some embodiments, the electronic device comprises the electrochemical device as described in the present application.

The present application has the beneficial effects as follows: The electrochemical device of the application realize the application of high-adhesion separator in fast charging systems, and improve cycle performance and drop phenomena, on the ground that a hard carbon negative electrode material combined with a high-adhesion separator can improve the cyclic deformation problem of hard carbon, meanwhile, using the characteristics of hard carbon materials and improving the liquid retention capacity between cell layers can improve the interface problem of the high-adhesion separator.

### BRIEF DESCRIPTION OF THE DRAWINGS

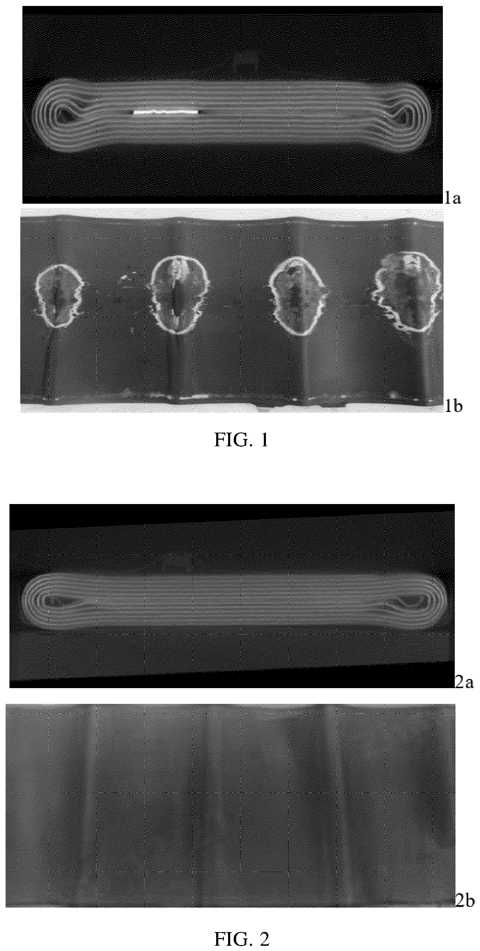

Fig. 1 is a CT/interface diagram of the electrode assembly interface in Comparative Example 1 of the application, in which Fig. 1a shows the corner warping situation, and Fig. 1b shows the interface lithium evolution situation.
Fig. 2 is a CT/interface diagram of the electrode assembly interface in Example 1 of the application, in which Fig. 2a shows the corner warping situation, and Fig. 2b shows the interface lithium evolution situation.

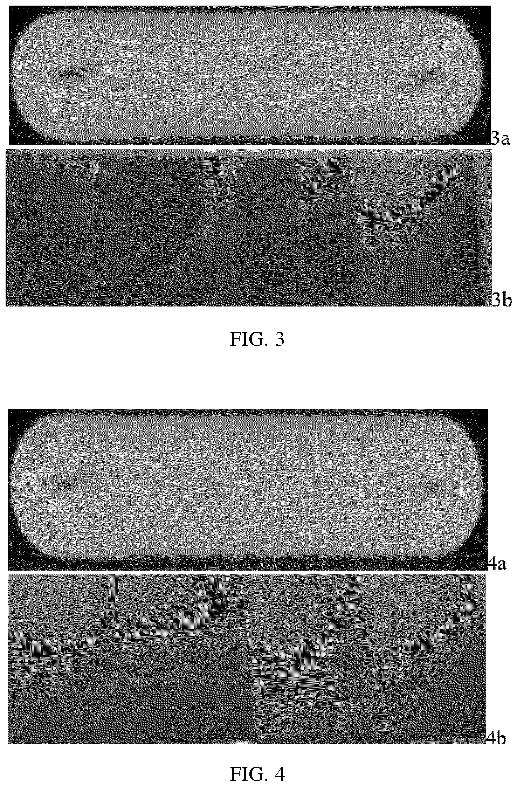

Fig. 3 is a CT/interface diagram of the electrode assembly interface in Example 2 of the application, in which Fig. 3a shows the corner warping situation, and Fig. 3b shows the interface lithium evolution situation.
Fig. 4 is a CT/interface diagram of the electrode assembly interface in Example 3 of the application, in which Fig. 4a shows the corner warping situation, and Fig. 4b shows the interface lithium evolution situation.

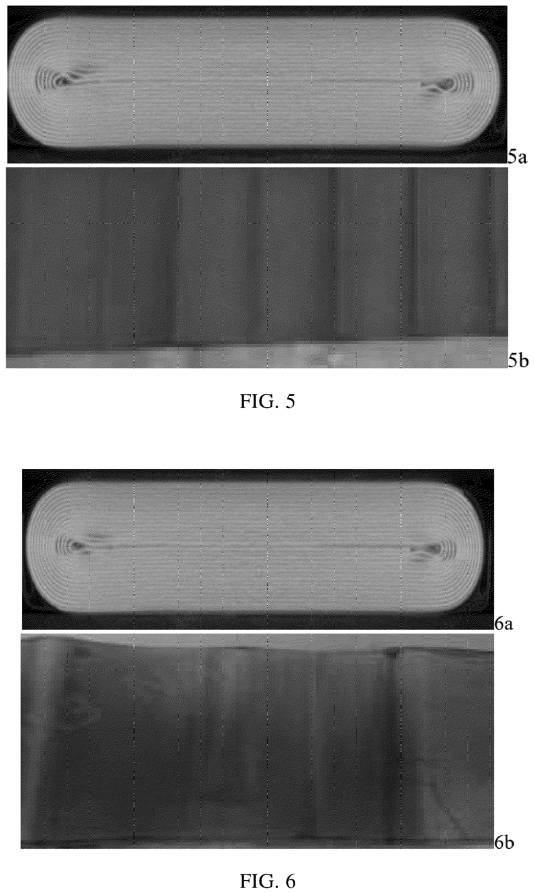

Fig. 5 is a CT/interface diagram of the electrode assembly interface in Example 4 of the application, in which Fig. 5a shows the corner warping situation, and Fig. 5b shows the interface lithium evolution situation.
Fig. 6 is a CT/interface diagram of the electrode assembly interface in Example 5 of the application, in which Fig. 6a shows the corner warping situation, and Fig. 6b shows the interface lithium evolution situation.

### DETAILED DESCRIPTION

It should be understood that the disclosed embodiments are merely examples of the application, and the application can be implemented in various forms. Therefore, the specific details disclosed herein should not be construed as limitations, but merely serve as the basis for the claims and serve as the representative basis to be used to teach those skilled in the art to implement this application in various ways. In the description of the application, CT images refer to two-dimensional projection and scan images, and the CT images can be obtained by measurement of instruments or device well known to those skilled in the art (for example, GE Phoenix vtomex S device).

In the description of this application, terms and professional words that are not explicitly described are common knowledge of those skilled in the art, and methods that are not explicitly described are conventional methods known to those skilled in the art.

The electrochemical device of the application will be described in detail below.

The electrochemical device of the application may be any one selected from the following devices: lithium secondary batteries, supercapacitors, lithium-sulfur batteries, sodium ion batteries, lithium-air batteries, zinc-air batteries, aluminum-air batteries, and magnesium ion battery. In particular, the electrochemical device may be a lithium secondary battery.

### [Positive Electrode Sheet]

In some embodiments, the electrochemical device comprises a positive electrode sheet.

The positive electrode sheet is a positive electrode sheet that is well known in the art and can be used in electrochemical devices. In some embodiments, the positive electrode sheet comprises a positive electrode current collector and a positive electrode active material layer disposed on the positive electrode current collector.

In some embodiments, the positive electrode active material layer comprises a positive electrode active material. In some embodiments, the positive electrode active material comprises a composite oxide containing lithium and at least one selected from cobalt, manganese, and nickel; in some embodiments, the composite oxide comprises lithium cobaltate, a ternary positive electrode material, and the like.

In some embodiments, the positive electrode active material layer may further comprise a conductive agent. The conductive agent is used to provide the positive electrode with electrical conductivity and can improve the conductivity of the positive electrode. The conductive agent is a conductive material which is well-known in the art and can be used for the positive electrode active material layer. The conductive agent can be selected from any conductive material as long as it makes no chemical change. In some embodiments, the conductive agent includes at least one of carbon-based materials (for example, natural graphite, artificial graphite, carbon black, acetylene black, Ketjen black, carbon fiber), metal-based materials (for example, metal powders or metal fiber including copper, nickel, aluminum, silver, etc.) and conductive polymers (for example, polyphenylene derivatives).

In some embodiments, the positive electrode active material layer may further comprise a adhesion agent. The adhesion agent is a adhesion agent which is well-known in the art and can be used for the positive electrode active material layer. The adhesion agent can improve the binding performance between the positive electrode active material particles each other and between the positive electrode active material particles and the positive electrode current collector. In some embodiments, the adhesion agent comprises at least one of polyvinyl alcohol, carboxymethyl cellulose, hydroxypropyl cellulose, diacetyl cellulose, polyvinyl chloride, carboxylated polyvinyl chloride, polyvinyl fluoride, polymer containing ethylene oxide, polyvinylpyrrolidone, polyurethane, polytetrafluoroethylene, polyvinylidene fluoride, polyethylene, polypropylene, styrene butadiene rubber, acrylic (ester) styrene butadiene rubber, epoxy resin, and nylon.

In some embodiments, the structure of the positive electrode sheet is a structure of the positive electrode sheet which is well-known in the art and can be used in an electrochemical device.

In some embodiments, the preparation method of the positive electrode sheet is a preparation method of the positive electrode sheet which is well-known in the art and can be used in an electrochemical device. In some embodiments, in the preparation of the positive electrode slurry, the positive electrode active material and the adhesion agent are usually added, and the conductive material and the thickener are added as needed, and then they are dissolved or dispersed in the solvent to make the positive electrode slurry. The solvent is volatilized and removed during the drying process. The solvent is a solvent which is well-known in the art and can be used as a positive electrode active material layer, such as but not limited to N-methylpyrrolidone (NMP).

### [Negative Electrode Sheet]

In some embodiments, the electrochemical device comprises a negative electrode sheet.

The negative electrode sheet is a negative electrode sheet which is well known in the art and can be used in electrochemical devices. In some embodiments, the negative electrode sheet comprises a negative electrode current collector and a negative electrode active material layer disposed on the negative electrode current collector. In some embodiments, the negative electrode active material layer may comprise a negative electrode active material, a conductive agent, and a adhesion agent.

In some embodiments, the negative electrode active material layer contains hard carbon and the negative electrode active material layer has a porosity of 20% to 60%. In this case, the electrolyte storage capacity of the cell during the preparation process can be improved, and the electrolyte replenishment during the cycle can be guaranteed. If the negative electrode active material layer has a porosity of less than 20%, due to insufficient liquid storage, the electrolyte will not be replenished after consumption, leading to deteriorate the cycle performance. The porosity of greater than 60% will cause the formation of the film to be unstable and consume too much lithium ions, thereby reducing energy density. In some embodiments, preferably, the negative electrode active material layer has a porosity of 40% to 60%. In some embodiments, the porosity of the negative electrode active material layer can be obtained by the measurement of a mercury porosimeter.

In some embodiments, the hard carbon has a particle size Dᵥ99 of 12 µm to 30 µm, where Dᵥ99 is the particle size when the accumulation is 99% from the small diameter side in the cumulative distribution on a volume basis.

The particle size Dᵥ99 of the hard carbon can be obtained by testing with a particle size analyzer by a method well known in the art. In some embodiments, Dᵥ99 can be obtained by the measurement of a sieving method, a specific surface area (BET) surface measurement method, or a laser diffraction analysis method.

The laser diffraction analysis method is to measure the intensity of the scattered light when the laser beam passes through the dispersed particle sample, and obtain the corresponding particle size. In some embodiments, Dᵥ99 can be obtained by the measurement of laser diffraction analysis on a Malvern-type analyzer. The Malvern type analyzer is for example, but not limited to, Malvern 2000, Malvern MasterSizer (such as Mastersizer S), Malvern 2600, Mastersizer 3000, or Malvern 3600.

In some embodiments, the hard carbon has a specific surface area of 2 m²/g to 8 m²/g. If the hard carbon has a specific surface area of less than 2 m²/g, it would lead to insufficient porosity, affect the electrolyte storage of the battery electrode sheets, and deteriorate the cycle performance; if the hard carbon has a specific surface area of more than 8 m²/g, it would cause the formation of the film to be unstable and consume too much lithium ions, thereby reducing the energy density. The specific surface area of hard carbon can be obtained by the measurement of a specific surface area tester.

In some embodiments, the hard carbon precursor includes at least one of high molecular weight polymers, plants, and resins. Different types of hard carbon precursor materials are combined with different process parameters to obtain hard carbon materials with a specific surface area of 2 m²/g to 8 m²/g, to in turn obtain a negative electrode active material layer with a porosity of 20% to 60%. Different types of hard carbon precursor materials are combined with different process parameters to obtain hard carbon materials with different specific surface areas, which technology is the prior art in this field and will not be described in details here.

In some embodiments, the negative electrode active material layer has a compacted density of 0.8 g/cm³ to 1.5 g/cm³. If the negative electrode active material layer has a compacted density of less than 0.8 g/cm³, it would lead to lower adhesion force of the negative electrode sheet, which results in release of the active material from the collector and loss of electrical contact, thus affects the cycle performance. If the negative electrode active material layer has a compacted density of greater than 1.5 g/cm³, it would lead to insufficient porosity, which affects the battery electrode sheet storage and deteriorates the cycle performance. In some embodiments, the compacted density of the negative electrode active material layer can be obtained by the measurement of a method well known in the art using a punching machine, a micrometer, or the like.

In some embodiments, the negative electrode active material layer may further comprise a conductive agent. The conductive agent is used to provide electrical conductivity for the negative electrode and can improve the conductivity of the negative electrode. The conductive agent is a conductive material which is well known in the art and can be used for the negative electrode active material layer. The conductive agent can be selected from any conductive material as long as it makes no chemical change. In some embodiments, the conductive agent comprises at least one of carbon-based materials (for example, carbon nanotubes, natural graphite, artificial graphite, conductive carbon black, acetylene black, Ketjen black, carbon fiber), metal-based materials (for example, metal powders or metal fibers including copper, nickel, aluminum, silver, and so on) and conductive polymers (for example, polyphenylene derivatives).

In some embodiments, the negative electrode active material layer may further comprise a adhesion agent. The adhesion agent is a adhesion agent which is well known in the art and can be used for the negative electrode active material layer. In some embodiments, the adhesion agent includes at least one of styrene butadiene rubber (SBR), vinylidene fluoride-hexafluoropropylene copolymer (PVDF-co-HFP), polyvinylidene fluoride, polyacrylonitrile, polymethylmethacrylate , Polyvinyl alcohol, carboxymethyl cellulose, hydroxypropyl cellulose, polyvinyl chloride, carboxylated polyvinyl chloride, polyvinyl fluoride, polymers containing ethylene oxide, polyvinylpyrrolidone, polyurethane, polytetrafluoroethylene polyethylene, polypropylene, acrylic (ester) styrene butadiene rubber, epoxy resin, and nylon.

In some embodiments, the negative electrode active material layer may comprise at least one of the following combinations: a combination of hard carbon, carbon nanotubes, and styrene-butadiene rubber; a combination of hard carbon, conductive carbon black, and polyvinylidene fluoride; a combination of hard carbon, artificial graphite and polyvinyl fluoride; a combination of hard carbon, Ketjen black and polyacrylonitrile. In some embodiments, preferably, the negative electrode active material layer comprises a combination of hard carbon, carbon nanotubes, and styrene-butadiene rubber, which combination can achieve further beneficial effects compared to other combinations.

In some embodiments, the structure of the negative electrode sheet is a structure of the negative electrode sheet which is well known in the art and can be used in an electrochemical device.

In some embodiments, the preparation method of the negative electrode sheet is a preparation method of the negative electrode sheet which is well-known in the art and can be used in an electrochemical device. In some embodiments, in the preparation of the negative electrode slurry, the negative electrode active material and the adhesion agent are usually added, and the conductive material and the thickener are added as needed, and then they are dissolved or dispersed in the solvent to make the negative electrode slurry. The solvent is volatilized and removed during the drying process. The solvent is a solvent which is well known in the art and can be used as the negative electrode active material layer, such as but not limited to water. The thickener (dispersant) is a thickener which is well known in the art and can be used as a negative electrode active material layer, such as but not limited to sodium carboxymethyl cellulose.

### [Separator]

In some embodiments, the electrochemical device comprises a separator.

The separator is a separator which is well known in the art and can be used in electrochemical devices, such as, but not limited to, a polyolefin-based porous film.

In some embodiments, the separator comprises a substrate. In some embodiments, the substrate comprises a single layer or multi-layer formed by at least one of polyethylene, polypropylene, polyvinylidene fluoride, ethylene-propylene copolymer, ethylene-butene copolymer, ethylene-hexene copolymer, ethylene-methyl methacrylate copolymer, polyethylene terephthalate, polyimide, or aramid. For example, polyethylene may comprise at least one selected from high-density polyethylene, low-density polyethylene, or ultra-high molecular weight polyethylene. Particularly for polyethylene and polypropylene, they have a good effect on preventing short circuits, and can improve the stability of electrochemical devices through the turn-off effect. In some embodiments, the separator substrate has a thickness in the range of about 5 µm to 500 µm.

In some embodiments, the separator contains a porous layer. In some embodiments, the porous layer may be provided on at least one surface of the separator substrate to form a single layer or multi-layer. The porous layer on the surface of the separator can improve heat resistance, oxidation resistance and electrolyte infiltration performance of the separator, and enhance the adhesion between the separator and the electrode sheet. In some embodiments, the pores in the porous layer of the separator have a diameter in the range of about 0.01 µm to 1 µm.

In some embodiments, the porous layer is a polymer porous layer or an inorganic porous layer, or a porous layer formed by a mixed polymer and an inorganic substance. In some embodiments, the inorganic porous layer contains inorganic particles and/or a adhesion agent. In some embodiments, the inorganic particles in the inorganic porous layer are at least one of selected from aluminum oxide (Al₂O₃), silicon oxide (SiO₂), magnesium oxide (MgO), titanium oxide (TiO₂), hafnium dioxide (HfO₂), tin oxide (SnO₂), cerium oxide (CeO₂), nickel oxide (NiO), zinc oxide (ZnO), calcium oxide (CaO), zirconium oxide (ZrO₂), yttrium oxide (Y₂O₃), silicon carbide (SiC), boehmite, aluminum hydroxide, magnesium hydroxide, calcium hydroxide, or barium sulfate. In some embodiments, the adhesion agent in the inorganic porous layer is at least one of selected from polyvinylidene fluoride, vinylidene fluoride-hexafluoropropylene copolymer, polyamide, polyacrylonitrile, polyacrylate, polyacrylic acid, polyacrylate, sodium carboxymethyl cellulose, polyvinylpyrrolidone, polyvinyl ether, polymethyl methacrylate, polytetrafluoroethylene or polyhexafluoropropylene.

In some embodiments, the separator comprises an adhesive layer. The adhesive layer may be provided on at least one surface of the substrate, or on at least one surface of the porous layer, or between the substrate and the porous layer. For instance, the adhesive layer may be provided on the surface of the substrate close to the negative electrode active material layer. The adhesive layer can strengthen the interface between the negative electrode sheet and the separator, and in turn inhibit the deformation of the electrochemical device during the use.

In some embodiments, the adhesive layer is a polymer adhesive layer, and the polymer adhesive layer contains polymer particles. In some embodiments, the polymer particles are stacked in multiple layers in the polymer adhesive layer, and preferably, the number of stacked layers is less than or equal to four.

In some embodiments, the polymer particles are at least one of polyvinylidene chloride, polyvinylidene fluoride-hexafluoropropylene copolymer, styrene-butadiene copolymer, polyacrylonitrile, butadiene-acrylonitrile polymer, polyacrylic acid, polyacrylate, and acrylate-styrene copolymer, or a copolymer of at least two of the above-mentioned polymer monomers. In some embodiments, the polymer particles have a particle size of 0.2 µm to 2 µm. In some other embodiments, the polymer particles have a particle size of 0.3 µm to 1 µm.

In some embodiments, in particular, the adhesive layer comprises a single layer or mult-layer formed by at least one of polyvinylidene fluoride and vinyl-polysilsesquioxane.

In some embodiments, the electrochemical device may comprise at least one of the following combinations: a separator combination with hard carbon as the negative electrode material, polyethylene (PE) as the substrate, and polyvinylidene fluoride as the adhesive layer; a separator combination with hard carbon as the negative electrode material, polypropylene (PP) as the substrate and polyvinylidene fluoride as the adhesive layer; a separator combination with ethylene-hexene copolymer as the substrate and vinyl-polysilsesquioxane as the adhesive layer. In some embodiments, preferably, the electrochemical device comprises a separator combination with hard carbon as the negative electrode material, polyethylene (PE) as the substrate, and polyvinylidene fluoride as the adhesive layer, and this combination can obtain further beneficial effects compared to the other combination.

In some embodiments, the adhesive layer (for example, the adhesive force between the adhesive layer and the negative electrode active material layer) has an adhesive force of 5 N to 20 N, which can achieve a higher interlayer force and have the effect of inhibiting cyclic deformation by the negative electrode hard carbon material.

In some embodiments, the separator further comprises a ceramic layer. The ceramic layer can support the separator when the separator is pierced or short-circuited, and prevent the separator from shrinking and collapsing, so as not to cause more serious problems toward the electrochemical device. In some embodiments, the ceramic layer may include a mixture consisting of one or more of boehmite, alumina, and silica, etc. In some embodiments, the ceramic layer may be provided on the adhesive layer. In some embodiments, the adhesive layer is provided between the substrate and the ceramic layer to form multiple layers.

The present application does not particularly limit the shape and thickness of the separator. The preparation method of the separator is a preparation method of the separator which is well-known in the art and can be used in electrochemical devices.

In some embodiments, in the electrochemical device of the present application, the negative electrode sheet comprises hard carbon and the negative electrode active material layer has a porosity of 20% to 60%. The separator comprises a substrate and an adhesive layer, and the adhesive layer has an adhesive force of 5 N to 20N. At this time, based on the high porosity and liquid retention ability of the negative electrode active material layer containing hard carbon, the introduction of a high-adhesive separator in the hard carbon-containing system can enhance the interfacial adhesion between the layers and improve the problem of the hard carbon cycle deformation; meanwhile, the use of high liquid retention capacity of hard carbon improves the interface lithium evolution caused by the high-adhesive separator squeezing the electrolyte between the layers and the lack of electrolyte, so as to realize the application of the high-adhesive separator in the fast charging system and improve the drop phenomenon.

### [Electrolyte]

In some embodiments, the electrochemical device comprises an electrolyte.

In some embodiments, the electrolyte contains an electrolyte salt. The electrolyte salt is an electrolyte salt suitable for electrochemical devices, which is well known in the art. For different electrochemical devices, suitable electrolyte salts can be selected. For example, with respect to lithium ion batteries, lithium salt is generally used as the electrolyte salt.

In some embodiments, the electrolyte further comprises an organic solvent. The organic solvent is an organic solvent which is well-known in the art and is suitable for electrochemical devices; for example, a non-aqueous organic solvent is generally used. In some embodiments, the non-aqueous organic solvent comprises at least one of carbonate-based solvents, carboxylate-based solvents, ether-based solvents, sulfone-based solvents, or other aprotic solvents.

In some embodiments, the electrolyte further comprises additives. The additives are additives which are well-known in the art and are suitable for electrochemical devices, and can be added according to the required performance of the electrochemical device.

In some embodiments, the electrolyte has a conductivity of 8 mS/cm to 14 mS/cm. When the electrolyte has a conductivity of lower than 8 mS/cm, it will deteriorate the voltage rebound and reduce the energy density, and at the same time, it will cause insufficient dynamics for the electrochemical device and deteriorate cycle performance. However, when the electrolyte has a conductivity of greater than 14 mS/cm, it will cause the electrolyte to become unstable at high temperature and increase the side effects, thereby deteriorating the cycle performance. In some embodiments, preferably, the electrolyte has a conductivity of 8 mS/cm to 12 mS/cm.

The configuration of the electrolyte can be prepared by a method well known to those skilled in the art, and its composition can be selected according to actual needs.

Next, the electronic device of the application will be explained.

The electronic device of the application can be any electronic device, such as but not limited to a notebook computer, a pen input computer, a mobile computer, an e-book player, a portable phone, a portable fax machine, a portable copier, a portable printer, a head-mounted stereo headset, Video recorders, LCD TVs, portable cleaners, portable CD players, mini discs, transceivers, electronic notebooks, calculators, memory cards, portable recorders, radios, backup power supplies, motors, automobiles, motorcycles, assisted bicycles, bicycles, Lighting device, toys, game consoles, clocks, power tools, flashlights, cameras, large household storage batteries, lithium ion capacitors. It is noted that, in addition to the electronic devices listed above, the electrochemical device of the application is also applicable to energy storage power stations, marine transport vehicles, and air transport vehicles. Air transport vehicles include those in the atmosphere and outside the atmosphere.

In some embodiments, the electronic device comprises the electrochemical device as described in the application.

Hereinafter, the application will be further explained in conjunction with the examples. It should be understood that these examples are merely used to illustrate the application and not to limit the scope thereof. In the following examples and comparative examples, the reagents, materials, etc. used are all commercially available or synthetically available unless otherwise specified. The "lithium ion battery" in the following examples and comparative examples is an "electrochemical device" according to some examples of the present application.

The lithium ion batteries of Examples 1 to 20 and Comparative Example 1 were all prepared according to the following methods.

### (1) Preparation of the positive electrode sheet

A positive electrode active material lithium cobaltate (which had a molecular formula of LiCoO₂), a conductive agent conductive carbon black, and an adhesive polytetrafluoroethylene (PTFE) were stirred and mixed thoroughly in a solvent at a mass ratio of 9:0.4:0.6, to form a uniform positive electrode slurry; the positive electrode slurry was uniformly coated on the aluminum foil by the means of extrusion coating. After one-time cold pressing and slitting, the positive electrode sheet was obtained.

### (2) Preparation of the negative electrode sheet

Hard carbon as a negative electrode active material, carboxymethyl cellulose (CMC) as a dispersant, styrene butadiene rubber (SBR) as a adhesion agent, and carbon nanotube as a conductive agent were kneaded, stirred, and mixed in a solvent, allowing it to form a uniform negative electrode slurry; the negative electrode slurry was uniformly coated on the copper foil by extrusion coating. After cold pressing and slitting, the negative electrode sheet was obtained. Among them, the relevant parameters for the negative electrode sheet in Examples 1-5 and Comparative Example 1 were shown in Table 1.

### (3) Preparation of the separator

A PE porous polymer film was used as the separator. Among them, the relevant parameters of the separators in Examples 1-20 and Comparative Example 1 were shown in Table 1.

### (4) Preparation of the electrolyte

The preparation of the electrolyte was carried out under a dry argon atmosphere. Ethylene carbonate (EC), propylene carbonate (PC), diethyl carbonate (DEC), and propyl propionate (PP) were mixed at a mass ratio of EC:PC:DEC:PP=10:15:35:20 to form a mixed solution. Then, the lithium salt lithium hexafluorophosphate (LiPF₆) with a concentration of 1.15 mol/L was dissolved in the mixed solution to obtain the electrolyte.

### (5) Preparation of the lithium-ion batteries

The obtained positive electrode sheet, the separator, and the negative electrode sheet were laminated in order, so that the separator was located between the positive electrode sheet and the negative electrode sheet for isolation, which was then wound to obtain an electrode assembly. The electrode assembly was placed in the outer packaging foil. During the process, the liquid injection port was left, the electrolyte prepared above was poured from the liquid injection port. The preparation of the lithium ion battery was completed via the procedures of vacuum packaging, standing, formation, and forming.

Next, the performance test process for the lithium ion batteries in Examples 1 to 20 and Comparative Example 1 will be described.

### (1) High temperature cycle performance test

Under the condition of 45°C, the high-temperature cycle performance test for the lithium-ion battery was carried out by the constant current-constant voltage method. The lithium-ion battery was charged at a constant current of 3 C to 4.4 V, and then charged at a constant voltage of 4.4 V to 0.05 C. Then, it was discharged at 1 C up to 2 V, and the discharge capacity data at this time was recorded as the first cycle discharge capacity. According to the above-mentioned steps, the ratio of the discharge capacity obtained by cycling the lithium-ion battery for 500 cycles to the first cycle discharge capacity was the capacity retention rate after the lithium-ion battery was circulated for 500 cycles.

### (2) Deformation rate test of the electrode assembly

The thickness of the electrode assembly when the charge state of the electrode assembly was 50% power was denoted as do, the thickness of the cell after 500 cycles of the battery at 45°C was denoted as d₁, and the deformation rate of the electrode assembly = d₁/d₀, where the thickness of the electrode assembly was obtained by the measurement with a 700G Dongguan Chengli SMU-TG-1050 flat plate thickness tester.

### (3) Interface performance test of the electrode assembly

The lithium-ion battery was circulated for 500 cycles at 45°C and then disassembled to obtain the electrode assembly. The X-rays were used to perform two-dimensional projection and scanning on the electrode assembly (CT test; instrument name: GE Phoenix vtomex S) to evaluate the interface performance of the electrode assembly (including Whether there is warping at the corner and whether there is lithium evolution at the interface). As for the test results, please see the attached drawings and Table 2.

### (4) Test of porosity of the negative electrode active material layer

10 pieces of electrode sheet samples with a size of 50 mm × 100 mm were taken out. 10 pieces of the negative electrode active material layers were placed in a true porosity tester (Model: AccuPyc II 1340). The porosity of the sample was tested, and the true volume Vo₁ of the sample was measured out. Then, the thickness T for 10 pieces of samples was tested with a ten-thousand-point thickness gauge, and the apparent volume of the sample was calculated as Vo₁₀ = 50 × 100 × T, and the calculated value of the sample porosity was (Vo₁₀ - Voi)/Voio × 100%.

### (5) Test of the compacted density for the negative electrode active material layer

The compacted density of the negative electrode active material layer was obtained by the following process: 1) the negative electrode sheet was made into a 1540.25 mm² wafer by a punching machine, and its mass was recorded as M1; 2) the copper foil of the same material as the negative electrode current collector was taken and the empty copper foil with the same area as the wafer in step 1) was weighed, and its mass was recorded as M2; 3) the thickness of the wafer was measured by a 1/10 micrometer and recorded as H1, and the thickness of the empty copper foil was recorded as H2; 4) the compacted density of the negative electrode active material layer was calculated according to the equation: (M1- M2)/(H1-H2)×1540.25.

### (6) Test of the specific surface area of the hard carbon

The specific surface area of the hard carbon was obtained by the SSA-3600 specific surface area tester from BEIJING BUILDER ELECTRONIC TECHNOLOGY CO.,LTD. The test steps comprised: a helium-nitrogen mixed gas (volume ratio 4:1) was continuously passed through a U-shaped tube filled with a certain mass of hard carbon sample; the nitrogen in the mixed gas could be adsorbed in a liquid nitrogen environment. When the adsorption became saturated, the liquid nitrogen cup would drop, and the adsorbed nitrogen in the sample would be desorbed. The concentration change value during the gas adsorption and desorption process was detected and recorded by TCD. After the peak was cut, the specific surface area value of the sample was obtained by comparing the desorption peak area of the standard sample and that of the tested sample and calculating it.

### (7) Test of hard carbon particle size Dᵥ99

The particle size Dᵥ99 of the hard carbon was measured by the Mastersizer laser diffraction particle size distribution measuring device from Malvern Company. In the cumulative distribution on a volume basis, the particle size obtained when 99% of the particles were accumulated from the small diameter side thereof was Dᵥ99.

### (8) Adhesion force test of the separator

The battery was disassembled, and the electrode assembly as a whole was cut into a rectangular shape with a length of 100 mm and a width of 10 mm by a knife. The double-sided tape was used to stick the negative electrode on the stainless steel sheet and fixed it on the device. The other end of the separator was connected to the tension measuring device. The 180°C peeling method was employed to test the adhesion between the separator and the negative electrode, with the test speed of 300 mm/min and the test length of 40 mm.

The relevant parameters of the lithium ion battery and the performance test results thereof involved in Examples 1-20 and Comparative Example 1 were shown in Tables 1 to 2, respectively.

**Table 1**

| | Hard carbon particle size D99/µm | Specific surface area of hard carbon / m²/g | Compacte d density of the negative electrode active material layer /g/cm³ | Porosit y of the negative electrode active material layer /% | Adhesi on of the separator /N |
|---|---|---|---|---|---|
| Ex. 1 | 30 | 2 | 0.8 | 22 | 5 |
| Ex. 2 | 25 | 2.4 | 0.8 | 27 | 5 |
| Ex. 3 | 20 | 2.6 | 0.8 | 29 | 5 |
| Ex. 4 | 12 | 3.0 | 0.8 | 34 | 5 |
| Ex. 5 | 35 | 1.6 | 0.8 | 18 | 5 |
| Ex. 6 | 10 | 3.7 | 0.8 | 15 | 5 |
| Ex. 7 | 30 | 4 | 0.8 | 35 | 5 |
| Ex. 8 | 30 | 6 | 0.8 | 43 | 5 |
| Ex. 9 | 30 | 8 | 0.8 | 56 | 5 |
| Ex. 10 | 30 | 1.5 | 0.8 | 18 | 5 |
| Ex. 11 | 30 | 9.0 | 0.8 | 65 | 5 |
| Ex. 12 | 30 | 8 | 1 | 45 | 5 |
| Ex. 13 | 30 | 8 | 1.3 | 36 | 5 |
| Ex. 14 | 30 | 8 | 1.5 | 23 | 5 |
| Ex. 15 | 30 | 8 | 0.7 | 65 | 5 |
| Ex. 16 | 30 | 8 | 1.7 | 17 | 5 |
| Ex. 17 | 30 | 8 | 0.8 | 56 | 10 |
| Ex. 18 | 30 | 8 | 0.8 | 56 | 15 |
| Ex. 19 | 30 | 8 | 0.8 | 56 | 20 |
| Ex. 20 | 30 | 8 | 0.8 | 56 | 24 |
| Com. Ex. 1 | - | - | - | 10 | 3 |

| | | | | | |
|---|---|---|---|---|---|
| Note: "-" in Table 1 indicates that there is no corresponding data. | | | | | |

**Table 2**

| | Battery capacity retention rate after 500 cycles at 45°C/% | Deformation rate of the electrode assembly after 500 cycles at 45°C/% | Whether there is warping at the corner of the electrode assembly | whether there is lithium evolution at the electrode assembly interface |
|---|---|---|---|---|
| Ex. 1 | 84.3 | 12.3 | No | No |
| Ex. 2 | 85.1 | 12.7 | No | No |
| Ex. 3 | 86.4 | 12.4 | No | No |
| Ex. 4 | 84.4 | 13.6 | No | No |
| Ex. 5 | 72.0 | 17.6 | No | Yes |
| Ex. 6 | 75.9 | 11.4 | No | Yes |
| Ex. 7 | 85.4 | 13.6 | No | No |
| Ex. 8 | 85.9 | 12.6 | No | No |
| Ex. 9 | 86.7 | 12.8 | No | No |
| Ex. 10 | 74.9 | 16.8 | No | Yes |
| Ex. 11 | 72.9 | 15.9 | No | No |
| Ex. 12 | 83.7 | 11.8 | No | No |
| Ex. 13 | 86.9 | 10.5 | No | No |
| Ex. 14 | 85.7 | 12.4 | No | No |
| Ex. 15 | 69.9 | 15.0 | No | No |
| Ex. 16 | 84.4 | 11.0 | No | No |
| Ex. 17 | 83.4 | 9.9 | No | No |
| Ex. 18 | 82.4 | 8.2 | No | No |
| Ex. 19 | 81.4 | 6.7 | No | No |
| Ex. 20 | 61.4 | 11.0 | No | Yes |
| Com. Ex. 1 | 30.5 | 20.1 | Yes | Yes |

By comparing the performance test results of Examples 1-4 and Comparative Example 1, it can be seen that the increase of the porosity of the negative electrode active material layer and the adhesive force of the separator can effectively improve the high temperature cycle performance of the lithium ion battery, and at the same time the deformation rate of the electrode assembly is significantly improved.

By comparing the performance test results of Example 5 and Example 1, it can be seen that when the particle size of the material is too large, the porosity of the active material layer will be small, and the electrolyte supply will be insufficient during the cycle of the lithium ion battery, thereby deteriorating the cycle performance of the lithium ion battery.

By comparing the test results of Example 6 and Example 4, it can be seen that when the particle size of the material is too small, the cycle performance of the lithium ion battery will also deteriorate. This is mainly because that the particle size is too small, and during the cycle of lithium-ion batteries, lithium ions need to continuously consume lithium ions to form a film for protection, which further leads to deterioration of the cycle performance.

By comparing the performance test results of Examples 7-9 and Example 1, it can be seen that negative electrode active material layers with different porosities can be obtained by obtaining hard carbon materials with different specific surface areas, and then lithium ion batteries which can meet performance requirements are prepared.

By comparing the performance test results of Example 10 and Example 1, it can be seen that when the hard carbon material has a smaller specific surface area, the porosity of the negative electrode active material layer is reduced accordingly. Due to the insufficient electrolyte storage during the cycle of the lithium ion battery, it results in the deteriorated cycle performance.

By comparing the performance test results of Example 11 and Example 9, it can be seen that when the hard carbon material has a larger specific surface area, due to the increase in the contact area between the electrode sheet and the electrolyte, it readily takes place side reactions during the cycle of the lithium ion battery, which will consume lithium ions and in turn worsen the cycle performance.

By comparing the performance test results of Example 15 and Example 12, it can be seen that when the negative electrode active material layer has a relatively small compacted density, though a negative electrode sheet with a relatively high porosity can be obtained, this will increase the contact area between the electrode sheet and the electrolyte, leading to increasing the side reactions and worsening the cycle performance.

By comparing the performance test results of Example 16 and Example 12, it can be seen that when the negative electrode active material layer has a relatively large compacted density, the electrode sheet has a relatively low porosity, and the cycle performance is then deteriorated due to insufficient electrolyte storage during the cycle of the lithium ion battery.

By comparing the performance test results of Example 20 and Example 19, it can be seen that when the separator has a relatively large adhesive force, the electrolyte stored between the electrode sheets is squeezed out due to the separator with the adhesive characteristics, resulting in insufficient residual electrolyte and deteriorating cycle performance.

It can be seen from the above-mentioned examples and comparative examples in conjunction with attached drawings that the combination of the high-porosity hard carbon electrode sheet and the high-adhesion separator can effectively improve the circulation of the high-adhesion separator system and the deformation of the hard carbon system. This is mainly due to two points: one is to use the super interlayer adhesion effect of the high-adhesion separator to inhibit the cyclic deformation of the hard carbon system; and the second is to use the high porosity of the hard carbon to enhance the battery's liquid retention capacity and improve the circulation of the high-adhesion separator system, so as to achieve an improvement effect of 1 + 1 > 2.

The above are only examples of the application, and do not limit the application in any form. Although the application is disclosed as above in preferred embodiments, it is not intended to limit the application. Any person familiar with the profession will make some changes or modifications to the technical content disclosed above without departing from the scope of the technical solution in the present application, all of which is equivalent to equivalent implementation cases and falls within the scope of the technical solution in the present application.

## Claims

1. An electrochemical device, comprising a negative electrode active material layer and a separator, **characterized in that**,
the separator comprises a substrate and an adhesive layer;
the negative electrode active material layer comprises a hard carbon;
the negative electrode active material layer has a porosity of 20% to 60%; and
the adhesive layer has an adhesive force of 5 N to 20 N.

2. The electrochemical device according to claim 1, **characterized in that**,
the adhesive layer is provided on a surface of the substrate; and
the adhesive layer is provided between the substrate and the negative electrode active material layer.

3. The electrochemical device according to claim 1 or 2, **characterized in that**, the hard carbon has a volume-based Dᵥ99 of 12 µm to 30 µm.

4. The electrochemical device according to any one of claims 1 to 3, **characterized in that**, the hard carbon has a specific surface area of 2 m²/g to 8 m²/g.

5. The electrochemical device according to any one of claims 1 to 4, **characterized in that**, the negative electrode active material layer has a compacted density of 0.8 g/cm³ to 1.5 g/cm³.

6. The electrochemical device according to any one of claims 1 to 5, **characterized in that**, the substrate comprises a first substrate sub-layer and a second substrate sub-layer.

7. The electrochemical device according to claim 6, **characterized in that**,
the first substrate sub-layer and the second substrate sub-layer each independently comprise at least one selected from the group consisting of polyethylene, polypropylene, polyvinylidene fluoride, ethylene-propylene copolymer, ethylene-butene copolymer, ethylene-hexene copolymer, ethylene-methyl methacrylate copolymer, polyethylene terephthalate, polyimide and aramid.

8. The electrochemical device according to any one of claims 1 to 7, **characterized in that**, the adhesive layer comprises at least one selected from the group consisting of polyvinylidene fluoride and vinyl-polysilsesquioxane.

9. The electrochemical device according to any one of claims 1 to 8, **characterized in that**, the separator further comprises a ceramic layer.

10. The electrochemical device according to any one of claims 1 to 9, **characterized in that**, the negative electrode active material layer has a porosity of 40% to 60%.

11. An electronic device comprising an electrochemical device according to any one of claims 1 - 10.
